# EUROPEAN PATENT APPLICATION

(11) **EP 1 204 290 A2**
(43) Date of publication of application: **08.05.2002**
(21) Application number: 01124293.0
(22) Date of filing: 18.10.2001
(51) Int. Cl.: H04Q 7/38

(54) **Method, system and point-to-multipoint service center for performing mobile station location updates**

(30) Priority: 02.11.2000 US 703897
(71) Applicant: TELEFONAKTIEBOLAGET L M ERICSSON (publ), 126 25 Stockholm (SE)
(72) Inventor: Husain, Saif Abid, Brossard, Quebec J4X 1H7 (CA)
(74) Representative: HOFFMANN - EITLE

(57) **Abstract**

In a cellular telecommunications network, a method, system, and corresponding Point-to-Multipoint Service Center (PTM-SC) for allowing Mobile Station (MS) location information, such as the cell identification, the routing area identification and the location area identification to be received and stored in the PTM-SC. When the MS triggers a location update, it sends the location information to the SGSN, and further to the PTM-SC. Upon receipt of the location information, the PTM-SC stores it in a memory, such as for example in a subscribers' database. The PTM-SC can respond to a request received from a Point-to-Multipoint (PTM) service provider for IP addresses of a group of intended recipients of PTM transmission, and that satisfy a location criterion, by converting the group identification into IP addresses, and then filtering the IP addresses to asses which ones belong to MSs located within a given location area. The PTM-SC then responds back to the PTM service provider with a list of IP addresses of MSs that belong to subscribers of the given group and that satisfy the given location area criterion. The service provider, in combination with a Serving GPRS Support Node (SGSN) and a Gateway GPRS Support Node (GGSN), perform the actual PTM transmission to the intended subscribers. The PTM-SC comprises a memory for storing the location information, such as for example a subscriber database having a record per PTM subscriber, each record having a plurality of fields for storing the cell identification, the routing area, the location area, the group identification, and the IP address of each subscriber.

## Description

### BACKGROUND OF THE INVENTION

### Field of the Invention

The present invention relates to cellular telecommunications, and particularly to a method, a system, and a corresponding Point-to-Multipoint Service Center (PTM-SC) for performing mobile station location updates.

### Description of the Related Art

Wireless communications have changed over the last decade, evolving from the first generation of analog cellular service, to the second generation of digital cellular service. Among other advantages, digital cellular services allow subscribers to receive enhanced voice and data communications, while increasing the number of channels available in a given area. However, as the demand for wide-band wireless data transmission becomes more and more significant, and since cellular operators foresee a great business opportunity in fulfilling the subscribers' request for wireless wide-band transmissions, a third generation of cellular networks is under way of being achieved and implemented. The third generation of cellular networks could allow wide-band voice and data transmission at rates of up to 2 Mega bits per second, and make use of improved existing technology. For example, the Wide-band Code Division Multiple Access (W-CDMA), the Enhanced Data rates for Global Evolution (EDGE), and the General Packet Radio Service (GPRS) are all third-generation (3G) technologies that could provide highspeed connection of a Mobile Station (MS) in a pure 3G cellular network, or in a network comprising both 3G systems combined with legacy systems (second generation (2G) and first generation systems).

In particular, GPRS is a packet-based wireless communication service that may provide transmission data rates from 56 up to 114 Kbps and continuous connection to the Internet for MSs and computer users. The higher data rates will allow users to take part in video conferences and interact with multimedia web sites and similar applications using mobile handheld devices as well as notebook computers. GPRS is based on Global System for Mobile communications (GSM) and complements existing services provided by the legacy systems. In theory, GPRS packet-based service should also cost users less than circuit-switched services since communication channels are used on a shared-use, as-packets-are-needed basis rather than dedicated to one user at a time. It should also be easier to make applications available to mobile users because the higher data rate means that middleware currently needed to adapt applications to the slower speed of wireless systems will no longer be needed.

A typical GPRS network comprises a Gateway GPRS Support Node (GGSN) which acts as an interface between the packet core network and the public IP network, a Serving GPRS Support Node (SGSN) which is the GPRS network's switching node, a GPRS Home Location Register (HLR) storing the subscriber-related data, a plurality of Base Station Controllers (BSCs), each managing one or more Base Station Subsystems (BSSs) which are responsible for the actual radio communications with the MSs. Furthermore, a Point-to-Multipoint Service Center (PTM-SC) may be included in a GPRS network for providing Point-to-Multipoint (PTM) communications. PTM communications can be used for broadcast-like communications for selectively transmitting a variety of data to cellular subscribers. Examples of data that a group of subscribers may be interested in receiving are: stock quotes, weather forecast information, traffic-related information for a given area, etc. Thus, PTM communications are viewed by cellular service providers as a remarkable value-added service.

When a service provider wants to perform a PTM transmission for sending a given type of information to a certain group of subscribers, it typically first sends out a PTM request to the PTM-SC for inquiring about the current IP addresses of the intended recipients, i.e. the subscribers of a given group who are currently located in a given location area. The PTM-SC converts the subscriber group identification group into a list comprising the IP addresses of all the cellular subscribers having a PTM subscription and whose mobiles are turned on. The list is further sent from the PTM-SC to the SGSN/GGSN of the given network in a request message also comprising the location area identification of the geographical region in which the PTM transmission is to take place. Upon receipt of the request message, the SGSN/SGSN filters the received IP addresses on the basis of the location information it has for each IP address in order to determine which one of the MSs having the received IP addresses is currently located within the given location area. The result of this action is a sub-set of IP addresses belonging to MSs matching the given location area. This sub-set of IP addresses is returned to the PTM-SC in a request reply from the SGSN/GGSN, and further forwarded to the service provider. Having the list of the IP addresses of the intended recipients, i.e. the recipients having a PTM-SC subscription, whose MSs are turned on and that matches the location criterion, the service provider initiates, in collaboration with the SGSN/GGSN, the actual PTM transmission of the given information to the intended subscribers.

It was noted, however, that having to query the SGSN/GGSN for filtering the list of IP addresses of the PTM-SC subscribers on the basis of a given location area identification creates unnecessary messages on the Gm interface (between the PTM-SC and the SGSN/GGSN) along with additional processing demand on the SGSN/GGSN itself. The data elements of the list of IP addresses of the PTM subscribers is often a huge data file, and its transmission from the PTM-SC to the SGSN/GGSN takes a correspondent amount of bandwidth and processing capabilities from the SGSN/GGSN, thus reducing the bandwidth and processing capabilities left for user-related traffic.

Furthermore, it was further noted that the existing solution, wherein the subscriber location information is stored only in the SGSN/GGSN is not adequate for the foreseen escalation of the PTM services that will include an ever increasing number of queries sent from service providers to the PTM-SC, and further to the SGSN/GGSN.

It would be advantageous to have a method, system, and PTM-SC that provide an easy access to the information needed for performing PTM transmissions without the need of contacting the SGSN/GGSN for filtering IP addresses on the basis of the subscriber location information.

The present invention provides such a solution.

### Summary of the Invention

In order to solve the above-identified deficiencies, the present invention provides a method and system, and corresponding PTM-SC for storing the location information of cellular subscribers who have a PTM subscription, so that the need for interrogating the SGSN/GGSN for location mapping is eliminated.

It is therefore an object of the present invention to provide a method for sending Mobile Station (MS) location information to a Point-to-Multipoint Service center (PTM-SC), the method comprising the steps of:
triggering a location update in the MS;
determining a location information related to the MS;
sending the location information to the PTM-SC; and
updating the PTM-SC with the location information.

It is another object of the present invention to provide a method for sending Point-to-Multipoint (PTM) transmission to a group of PTM cellular subscribers, the method comprising the steps of:
formulating a PTM transmission request, the request comprising an identification of a group of cellular subscribers the transmission is intended for, and a location criterion designating a geographical area where the PTM transmission is to be performed;
responsive to the PTM transmission request, issuing for a Point-to-Multipoint Service Center (PTM-SC) a request for IP addresses of subscribers' Mobile Stations (MSs) which belong to the group and which are located within the geographical area;
responsive to the request for IP addresses, determining in the PTM-SC the IP addresses of subscribers' Mobile Stations (MSs) which belong to the group and which are located within the geographical area, on the basis of the identification of the group of cellular subscribers the transmission is intended for and the location criterion; and
responding to the request by returning the determined IP addresses.

It is yet another object of the invention to provide a Point-to-Multipoint Service Center (PTM-SC) comprising:
a memory for storing subscriber-related data; and
a processor connected to the memory for performing operations using the subscriber related data;
wherein the memory comprises, for each subscriber of a plurality of subscribers, an IP address assigned to a Mobile Station (MS) of the subscriber; and a location information related to a geographical area where the subscriber's MS is located.

### Brief Description of the Drawings

For a more detailed understanding of the invention, for further objects and advantages thereof, reference can now be made to the following description, taken in conjunction with the accompanying drawings, in which:
Figure 1 (Prior Art) is a nodal operation and signal flow diagram illustrating a typical scenario for performing a Point-to-Multipoint (PTM) message transmission in a the General Packet Radio Service (GPRS) network;
Figure 2 is a nodal operation and signal flow diagram illustrating an Mobile Station (MS) location update being performed to a Point-to-Multipoint Service Center (PTM-SC) of a GPRS network according an exemplary preferred embodiment of the invention;
Figure 3 is a nodal operation and signal flow diagram illustrating a scenario for performing a PTM message transmission in a GPRS network according to an exemplary preferred embodiment of the invention; and
Figure 4 is an exemplary high-level block diagram of a PTM-SC according to an exemplary preferred embodiment of the invention.

### Detailed Description of the Preferred Embodiments

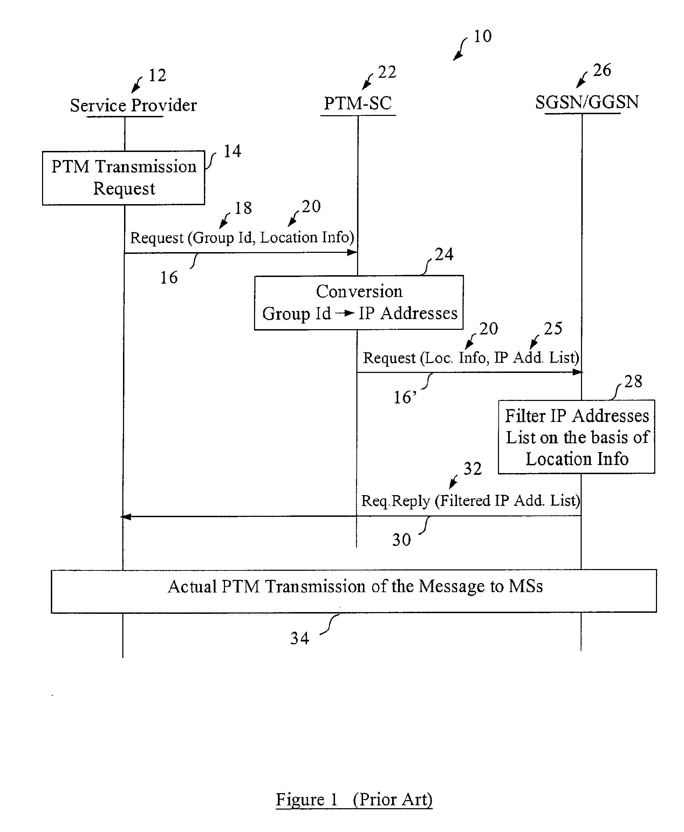

Reference is now made to Figure 1, wherein there is shown a nodal operation and signal flow diagram illustrating a prior art scenario for performing a Pointto-Multipoint (PTM) message transmission in a the General Packet Radio Service (GPRS) network 10. Typically, when a Service Provider (SP) desires to perform a PTM transmission, the necessary pieces of information comprise the subscriber group identification and the location information, such as the location area identification related to the geographical region in which the PTM transmission is to be performed. However, before the actual transmission, the group identification needs to be converted to actual IP addresses assigned to the Mobile Stations (MSs) currently located in the given geographical region. The location information of the MSs is held in the current network implementations in a combination of the Serving GPRS Support Node (SGSN) and the Gateway GPRS Support Node (GGSN). Thus, the PTM-SC must first interrogate the SGSN/GGSN in order to assess which MSs belong to the group of MSs the transmission is intended for and are located within the given geographical region, in a manner that is next to be described.

First, the SP 12 formulates a PTM transmission request, action 14. In order to determine to which actual IP addresses the PTM transmission is to be carried out, a PTM IP addresses location mapping request 16, comprising a subscribers group identification 18 and location information 20, is sent from the SP 12 to the PTMSC 22 of the GPRS network 10. Upon receipt of the request 16, the PTMSC 22 converts the subscribers group identification 18 into a list of IP addresses currently assigned to MSs having subscribed to the given group, action 24. The result of the action 24 is a list 25 comprising all the IP addresses of subscribers of network 10 who have a PTM subscription to the given group, such as for example to the "stock quotes group". The PTM-SC 22 further transmits to the SGSN/GGSN 26 the list 25 and the location information 20 in a PTM IP addresses location mapping request 16'. The SGSN/GGSN 26 receives the request 16' and filtes the received list 25 on the basis of the location information it has for each MS, action 28. Those skilled in the art would notice that the SGSN/GGSN 26 comprise the Packet Data Protocol (PDP) context of each MS, the PDP context having information related to the cell identification, routing area, and location area of each MS. Therefore, the SGSN/GGSN 26 has the ability to find out which ones of the received IP addresses from the list 25 correspond to MSs currently located in the geographical area represented by the location information 20.

The SGSN/GGSN 26 then returns to the SP 12, through the PTM-SC 22, a PTM IP addresses location mapping request reply 30 comprising a sub-set of the list 25, the list 32, which comprises all the IP addresses of the subscribers having a PTM subscription to the given group, and whose MSs are registered within the geographical area designated by the location area identification 20. Upon receipt of the list 32, the SP 12 can actually perform the PTM transmission of the message of interest to the PTM subscribers represented by the IP addresses of the list 32, in collaboration with the SGSN/GGSN 26, action 34.

It was noted, however, that having to query the SGSN/GGSN for filtering the list of IP addresses of the PTM-SC subscribers on the basis of a given location area identification creates unnecessary messages on the Gm interface (between the PTM-SC and the SGSN/GGSN) along with additional processing demand on the SGSN/GGSN itself. The data elements of the list of IP addresses of the PTM subscribers often makes up a huge data file, and its transmission from the PTM-SC to the SGSN/GGSN takes a correspondent amount of bandwidth and processing capabilities from the SGSN/GGSN, thus reducing the bandwidth and processing capabilities left for user-related traffic.

According to the preferred embodiment of the invention there is proposed to store the location information of the PTM subscribers' MSs in the PTM-SC 42, so that when a PTM request is issued by the SC 12, the SGSN/GGSN is no longer interrogated for the IP location mapping, as described hereinbefore.

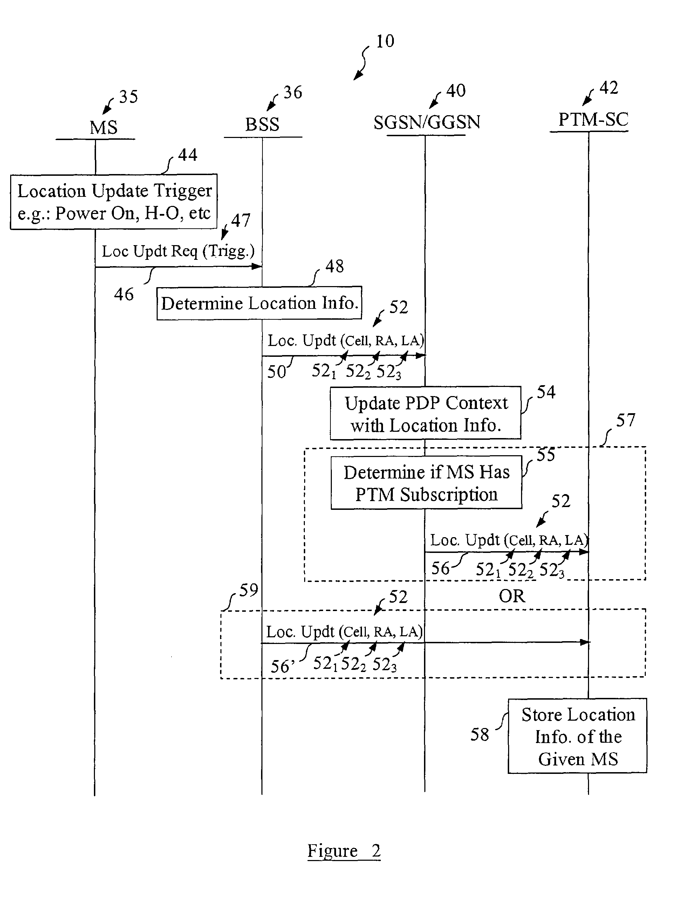

Reference is now made to Figure 2 which shows a nodal operation and signal flow diagram illustrating an exemplary preferred embodiment of the invention that solves the above-mentioned deficiencies by having each MS also register its actual location with the PTM-SC 42, trough a Base Station Subsystem (BSS) 36 and an SGSN/GGSN 40. First, a location update trigger is activated in the MS 35, action 44, by an event such as for example but not limited to a power on, a hand-off to another cell, or the transfer of the MS from a first state to a second state, such as for example from an Idle state to a stand-by state. A location update request 46 that may comprise the GPRS location update trigger 47 is then sent from the MS 35 to the BSS 36. Upon receipt of the request 46, the BSS 36 determines the location information of the MS 35, such as for example the cell identification of the cell in which the MS 35 is currently registered, the routing area and the location area of the MS 35, action 48, and sends a location update 50 comprising the location information 52 to the SGSN/GGSN 40. As mentioned, the location information 52 may comprise at least one of a cell identification 52₁, a routing area identification 52₂, and a location area identification 52₃. Upon receipt of the location update 50, the SGSN/GGSN 40 updates its PDP context of the given MS 35 with the location information 52, action 54. Furthermore, according to a first preferred embodiment of the invention, the SGSN/GGSN 40 further determines if the MS 35 has a PTM subscription, action 55, and if yes, i.e. if the MS 35 does have a PTM subscription, the SGSN/GGSN 40 also sends a PTM location update 56, that may comprise at least one of a cell identification 52₁, a routing area identification 52₂, and a location area identification 52₃, to the PTM-SC 42, action 57. Upon receipt of the PTM location update 56, the PTM-SC stores the received location information related to the MS 35 its memory (database), action 58. Therefore, by having the MS 35 (and all the MSs of the network 10) register their location information with the PTM-SC, the PTM-SC 42 can reply upon request for PTM transmission from the SP 12 without having to further interrogate the SGSN/GGSN for the IP addresses location mapping.

According to a second preferred embodiment of the present invention, once the BSS 36 determines the location information of the MS 35 in action 48, the BSS 36 may also send a PTM location update 56' comprising the determined location information 52 directly to the PTM-SC 42, action 59. Upon receipt of the PTM location update 56', the PTM-SC 42 stores the location information of the MS 35 in its own memory, action 58, just as mentioned hereinbefore. Therefore, once the PTM-SC 42 has the location information of each MS 35, it can further perform PTM transmissions upon request from the SP 12 without having to interrogate the SGSN/GGSN for the IP addresses location mapping. Since the method described in the second embodiment skips detecting if the MS 35 has a PTM subscription, according to this embodiment all the MSs served in the network 10 may register their location information with the PTM-SC, and therefore PTM transmissions may be performed not only to PTM subscribers, but to every cellular subscriber of the network 10. This may be useful for transmitting critical information, such as for example emergency or servicing messages.

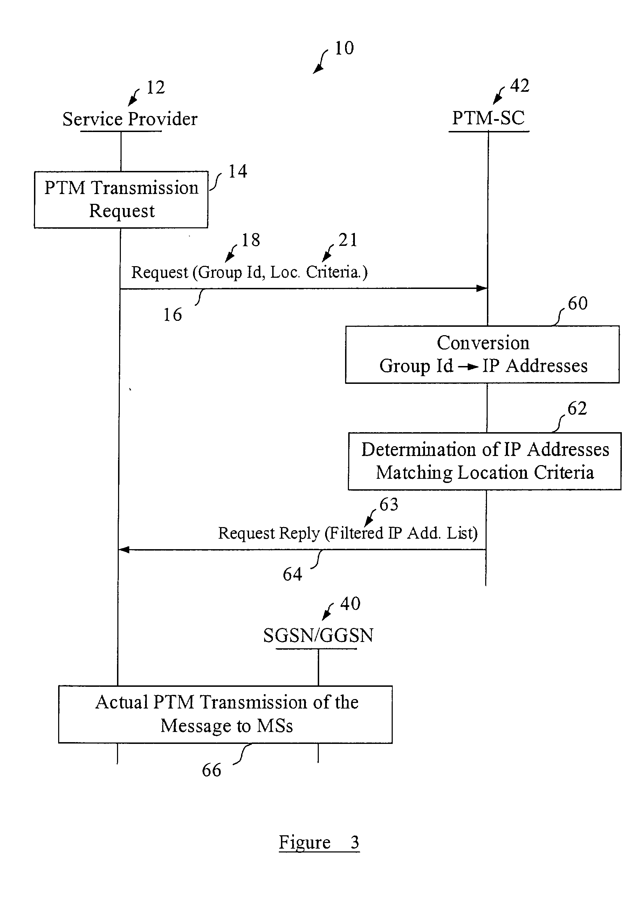

Reference is now made to figure 3 in which there is shown a nodal operation and signal flow diagram of an exemplary preferred embodiment of the invention related to the PTM transmission. First, a PTM transmission request is formulated in the SP 12, action 14. This action may be performed as it is already known in the art. In order to determine to which actual IP addresses the PTM transmission is to be performed, a PTM IP addresses location mapping request 16, comprising the subscriber group identification 18 and a location criterion 21, is sent from the SP 12 to the PTM SC 42 of the GPRS network 10. The location criterion 21 may comprise information related to the cell identification of a cell, a routing area or a location area where the PTM transmission is to be performed. According to the preferred embodiment of the invention, upon receipt of the request 16, the PTM-SC 42 determines the IP addresses of the MSs belonging to the group identified by 18, thus creating a list of IP addresses of all the MSs of that group, action 60. The PTMSC 42 then filters the list of IP addresses of all the MSs of the group on the basis of the location criterion 21, for determining which IP addresses from that list are also located within the geographical area designated by the location criterion 21, action 62. As a result of action 62, the PTM-SC creates a list 63 of IP addresses that belong to MSs having a subscription to the given group and that are currently located within the geographical area identified by the location criterion 21. The PTM-SC 42 then returns the list 63 in a PTM IP addresses location mapping request reply 64 to the SP 12. Having the list of IP addresses 63, which contains the IP addresses of the MSs of the intended PTM recipients, the SP 12 can further perform, in collaboration with the SGSN/GGSN 40, the actual PTM transmission of the message to the intended PTM subscribers, or to all cellular subscribers of network 10, action 66.

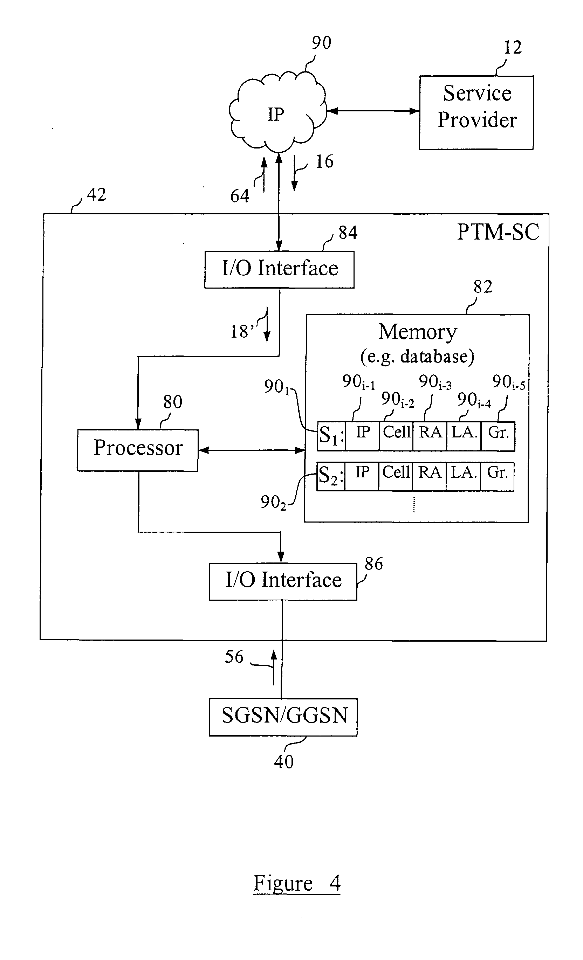

Reference is now made to figure 4, wherein there is shown an exemplary high-level block diagram of a PTM-SC 42 according to an exemplary preferred embodiment of the invention. The PTM-SC 42 comprises a processor 80 connected to a memory 82 that may be database-like memory. The memory 82 may have a record 90 for each subscriber, such as for each subscriber having a PTM subscription, and each such record 90ᵢ may comprise a first field 90ᵢ₋₁ for containing the IP address currently assigned to that subscriber's MS, a second field 90ᵢ₋₂ containing the cell identification where the subscriber has lastly registered, a third field 90ᵢ₋₃ for containing the routing area for reaching that subscriber's MS, a fourth field 90ᵢ₋₄ for containing the location area identification area for reaching that subscriber's MS, and a fifth field 90ᵢ₋₅ for containing the group identifications the subscriber subscribed to. Connected to the processor 80 may be a first I/O interface 84 for communicating with the SP 12, and a second I/O interface 86 for communicating with the SGSN/GGSN 40. The communication with the SP 12 may take place over a network, such as for example over an IP network 90. The PTM-SC 42 may receive from the SGSN/GGSN 40 a location update message 56, or from the BSS 36 via the SGSN/GGSN 40 a location update 56', each such message comprising the location information 52 of the MS 35, as exemplified hereinbefore with reference to Figure 2. The location update may be received at the I/O interface 86 and further sent to the processor 80. The processor 80 may extract from messages 56 or 56' the location information 52, such as for example at least one of a cell identification 52₁, a routing area identification 52₂, and a location area identification 52₃, and send it to the memory 82, where the extracted information is stored in the appropriate field of the subscriber record 90ᵢ of the given subscriber.

Once the PTM-SC 42 has knowledge of the location information 52 of each PTM subscriber as described hereinbefore, the SP 12 may send to the PTMSC 42 a PTM IP addresses location mapping request 16, comprising the subscriber group identification 18 (shown in Fig. 3) and the location criterion 21 (shown in Fig. 3). The PTM-SC 42 receives the request 16 at the I/O interface 84, which forwards the request, possibly reformatted, to the processor 80. The processor 80 determines the IP addresses of the MSs belonging to the group identified by the group identification 18 by querying the memory 82, and further filters the records 90ᵢ for determining which IP addresses from all IP addresses are also located within the geographical area designated by the location criterion 21. As a result, the processor creates a list 63 (not shown in Fig. 4) of IP addresses that belong to MSs having a subscription to the given group and that are currently located within the given geographical area identified by the location criterion 21. The processor 80 of the PTM-SC 42 then returns the list 63 trough the interface 84 and possibly through the IP network 90 to the SP 12 in the request reply message 64. Once the SP 12 has the information related to the IP addresses of the intended recipients, it can further perform, in collaboration with the SGSN/GGSN 40, the actual PTM transmission of the message of interest to the intended PTM subscribers.

The processor 80 and the memory 82 may take various forms depending upon a preferred implementation of the product manufacturer. For example, the processor 80 and the memory 82 may be software applications or modules, hardware devices such as programmable and/or memory chips, or any other suitable combination thereof Preferably, the processor 80 comprises a software application running over an operating system, itself running on top of a computer-like system o the PTM-SC 42, while the memory 82 is preferably a database-like memory, using a software application running over an operating system, itself running on top of a computer-like system o the PTM-SC 42.

As it will be readily apparent for those skilled in the art, the signaling associated with the implementation of the present invention may take various forms without affecting the scope of the invention. In particular, for example, the present invention may be implemented using the GPRS standard "3G Partnership, Project Technical Specification 23.060, version 3.00, Service Description" herein enclosed by reference, and the GSM standard "GSM 02.60 version 8.00 stage 1", also herein enclosed by reference.

Furthermore, it is to be noted that according to the preferred embodiment of the invention, the PTM-SC 42 is preferably a standalone node of the cellular telecommunications network 10 connected to the SGSN/GGSN 40, and to at least one SP 12. However, other implementations are further possible, and the PTM-SC of the present invention may be as well a software application running in various nodes of the cellular telecommunications network 10.

Although several preferred embodiments of the method and system of the present invention have been illustrated in the accompanying Drawings and described in the foregoing Detailed Description, it will be understood that the invention is not limited to the embodiments disclosed, but is capable of numerous rearrangements, modifications and substitutions without departing from the spirit of the invention as set forth and defined by the following claims.

## Claims

1. In a cellular telecommunications network, a method for sending Mobile Station (MS) location information to a Point-to-Multipoint Service center (PTM-SC), the method comprising the steps of:
triggering a location update in the MS;
determining a location information related to the MS;
sending the location information to the PTM-SC; and
updating the PTM-SC with the location information.

2. The method claimed in claim 1, wherein the location information comprises at least one of a cell identification, a routing area identification and a location area identification.

3. The method claimed in claim 1, wherein the step of sending comprises the step of:
sending the location information from a Base Station Sub-system (BSS) to a Serving GPRS Support Node (SGSN);
determining in the SGSN whether the MS has a Point-to-Multipoint (PTM) subscription; and
if the MS has a (PTM) subscription, sending the location information to the PTM-SC.

4. The method claimed in claim 1, wherein the step of sending comprises the step of:
sending from a Base Station Sub-system (BSS) to PTM-SC the location information.

5. The method claimed in claim 1, wherein the step of updating comprises the step of:
at the PTM-SC, storing in a memory the location information related to the MS.

6. The method claimed in claim 5, wherein the memory is a subscribers' database.

7. The method claimed in claim 1, wherein the step of triggering comprises one of a power-on of the MS, a hand-off of the MS, and a change of the MS from a first state to a second state.

8. In a cellular telecommunications network, a method for sending Point-to Multipoint (PTM) transmission to a group of PTM cellular subscribers, the method comprising the steps of:
formulating a PTM transmission request, the request comprising an identification of a group of cellular subscribers the transmission is intended for, and a location criterion designating a geographical area where the PTM transmission is to be performed;
responsive to the PTM transmission request, issuing for a Point-to-Multipoint Service Center (PTM-SC) a request for IP addresses of subscribers' Mobile Stations (MSs) which belong to the group and which are located within the geographical area;
responsive to the request for IP addresses, determining in the PTM-SC the IP addresses of subscribers' Mobile Stations (MSs) which belong to the group and which are located within the geographical area, on the basis of the identification of the group of cellular subscribers the transmission is intended for and the location criterion; and
responding to the request by returning the determined IP addresses.

9. The method claimed in claim 8, wherein the step of formulating is performed in a service provider node connected to the cellular telecommunications network, and the method further comprises the step of:
following the step of issuing the request for IP addresses, sending from the service provider to the PTM-SC the request for IP addresses;
wherein the step of responding comprises sending from the PTM-SC to the service provider a list comprising the determined IP addresses.

10. The method of claim 9, wherein the step of determining, comprises the steps of:
converting the group identification into a list of individual IP addresses;
determining which ones of the MSs having the individual IP addresses are located within a geographical area represented by the location criterion.

11. The method of claim 10, further comprising the step of:
transmitting to the group of cellular subscribers a PTM message, wherein the cellular subscribers belong to the group and have MSs being located within the geographical area represented by the location criterion.

12. A Point-to-Multipoint Service Center (PTM-SC) comprising:
a memory for storing subscriber-related data; and
a processor connected to the memory for performing operations using the subscriber related data;
wherein the memory comprises, for each subscriber of a plurality of subscribers, an IP address assigned to a Mobile Station (MS) of the subscriber; and a location information related to a geographical area where the subscriber's MS is located.

13. The PTM-SC as claimed in claim 12, wherein the location information comprises at least one of a cell identification, a routing area identification, and a location area identification.

14. The PTM-SC as claimed in claim 13, wherein the memory is a subscriber database and comprises a record for each subscriber, and the record comprises a first field containing the IP address assigned to an MS of said each subscriber, and a second field containing the cell identification where the MS of said each subscriber is located.

15. The PTM-SC as claimed in claim 14, wherein the record further comprises a third field containing one of a routing area identification of the MS of the subscriber and a location area identification.

16. The PTM-SC as claimed in claim 15, wherein the record further comprises a forth field containing subscriber group information of the MS of the subscriber.

17. The PTM-SC as claimed in claim 13, wherein the PTM-SC is connected to a service provider node and to a Serving GPRS Support Node (SGSN).

18. The PTM-SC as claimed in claim 17, wherein the PTM-SC receives via the SGSN the location information related to a geographical area where the subscriber's MS is located.

19. The PTM-SC as claimed in claim 16, wherein the PTM-SC receives via the SGSN, responsive to a location update triggered by the MS, at least one of the cell identification of the cell where the subscriber's MS is located and the routing area identification of the MS.

20. The PTM-SC as claimed in claim 13, wherein the PTM-SC is connected to a PTM service provider.

21. The PTM-SC as claimed in claim 20, wherein the PTM-SC receives from the PTM service provider a request for IP addresses of subscribers' MSs which belong to a particular subscribers' group and which are located within the geographical area designated by the location information, the request comprising an identification of the subscribers' group and the location information.

22. The PTM-SC as claimed in claim 21, wherein responsive to the receipt of the request, the PTM-SC determines the IP addresses of subscribers' MSs which belong to the particular group and which are located within the geographical area, on the basis of the identification of the group of cellular subscribers to whom the transmission is intended and to the location information designating the geographical area where the transmission is to be performed.

23. The PTM-SC as claimed in claim 22, wherein the step of determining comprises the steps of:
converting the subscribers' group identification into a list of individual IP addresses; and
determining which ones of the MSs having the individual IP addresses are located within a geographical area represented by the location information.

24. The PTM-SC as claimed in claim 22, wherein following the determination of IP addresses, the PTM-SC returns to the PTM service provider the determined IP addresses.
